# FASCICULE DE BREVET EUROPEEN

(11) **EP 2 129 232 B1**
(45) Date de publication et mention de la délivrance du brevet: **31.08.2011**
(21) Numéro de dépôt: 08717138.5
(22) Date de dépôt: 26.02.2008
(51) Int. Cl.: A23F 3/32, A23F 5/12, A23L 1/00, A23L 2/395, A23P 1/02

(54) **PROCEDE DE COMPACTION DE POUDRES VEGETALES ET PRODUITS OBTENUS**
VERFAHREN ZUM VERDICHTEN VON PFLANZENPULVERN UND ERHALTENE PRODUKTE
PROCESS FOR COMPACTING PLANT POWDERS AND PRODUCTS OBTAINED

(30) Priorité: 26.02.2007 FR 0701338; 12.10.2007 FR 0758272
(43) Date de publication de la demande: 09.12.2009
(73) Titulaire: Eurotab, 42170 Saint Just Saint Rambert (FR)
(72) Inventeur: RUBINSTENN, Gilles, F-75005 Paris (FR); BRANLARD, Paul, F-69005 Lyon (FR); BROSSE, Jacques, F-42320 La Grande Croix (FR)
(74) Mandataire: Tetaz, Franck Claude Edouard
(86) Numéro de dépôt international: PCT/EP2008/052311
(87) Numéro de publication internationale: WO 2008/107342

(56) Documents cités:
- EP-A- 0 229 920
- CA-A- 808 588
- US-A- 3 511 666
- US-A- 3 770 457

## Description

La présente invention concerne des pastilles permettant la préparation de café par contact avec de l'eau chaude. Elle concerne également le procédé de préparation permettant de fabriquer les dites pastilles.

On sait que le consommateur ordinaire de boissons chaudes, notamment de café, les prépare habituellement par l'un ou l'autre des procédés de percolation, d'infusion ou de lixiviation. Ces termes, dans leurs sens propre, désignent les opérations suivantes :
- dans la percolation, il y a passage d'eau sous forme liquide ou vapeur à travers une poudre ou un solide, le passage étant forcé sous l'effet de la pression appliquée à l'eau.
- dans l'infusion, on met directement dans la tasse ou l'on doit boire de la poudre solide, et on verse l'eau chaude dessus, et on laisse séjourner l'ensemble pendant plusieurs minutes. Dans le cas du café, ce mode de préparation fournit ce qui est connu sous le nom de « café à la turque ». Selon une variante de l'infusion, la poudre de café est mise dans un sachet qu'on laisse tremper dans l'eau chaude. Une autre variante de l'infusion est pratiquée dans des cafetières surtout répandues au Royaume-Uni, la poudre séjournant dans l'eau chaude de la cafetière, puis une opération de poussage d'un piston filtrant permet de localiser le marc au fond de la cafetière. Certains végétaux peuvent donner lieu à une boisson chaude par décoction, la décoction se distinguant de l'infusion par le fait que l'eau est à température d'ébullition.
- dans la lixiviation, on place le café en poudre dans un filtre en papier porté par une cafetière ; le filtre a une forme générale à peu près conique, et on verse de l'eau chaude qui lèche et/ou traverse la poudre et passe lentement à travers le filtre en papier en descendant sous l'effet de la simple gravité. La cafetière a pour rôle principal de chauffer l'eau et de porter le filtre ; il s'agit donc d'un matériel de grande simplicité.

Dans un mode de réalisation particulier, les pastilles selon l'invention sont mises en oeuvre dans des procédés de lixiviation pour la préparation de boisson chaudes. L'usage de poudre est très répandu car il facilite grandement l'exhalaison de l'arôme et des qualités gustatives, mais il présente quelques inconvénients, comme le volume important par rapport au poids, la difficulté de dosage, et la saleté quand on en laisse tomber lors des manipulations

Le café à la turque à l'inconvénient de laisser le marc de café dans la tasse où l'on boit, ce qui est désagréable à boire si le marc passe dans la bouche. L'usage de sachets à l'inconvénient de laisser la poudre à l'air avant usage, et donc de perdre de l'arôme ; en outre l'usage de cafetière à piston filtrant nécessite de posséder ce type spécial de cafetière, et si la quantité de boisson à préparer n'est pas égal à celui du volume de la cafetière, on gaspille le café.

La boisson café obtenue par percolation a l'inconvénient qu'il faut posséder ce type de cafetières, souvent les tasses sont préparées une à une, ce qui est désagréable quand on fait du café pour un groupe de personnes. À cause de la pression à exercer, le matériel doit être solide et relativement coûteux. Ce système a aussi l'inconvénient de faire du café de force et de concentration déterminée, souvent excessive.

Il est donc très désirable de fournir des boissons chaudes à base de produits végétaux, spécialement de café, sous une forme adaptée à la lixiviation (c'est-à-dire à la préparation de boisson chaude par passage de l'eau chaude sur un ingrédient solide par simple gravité), sans pour autant que cette forme appropriée à la lixiviation ne soit utilisable que pour la préparation de boisson par lixiviation.

On a bien pensé à faire des pastilles, ou comprimés de poudre de café, mais cela va à l'encontre du préjugé a priori très favorable en faveur des poudres dont il a été parlé plus haut. D'ailleurs, les brevets qui ont quand même tenté de faire des comprimés avaient en vue avant tout la percolation (brevet US 3,511,666, brevet BE 792661, demande de brevet EP 0 229 920), et l'usage éventuel de sacs préconisés pour contenir les dits comprimés était significatif de la mauvaise cohésion desdits comprimés, cette mauvaise cohésion étant elle-même un résultat de ce que les procédés proposés tentaient de comprimer sans trop s'éloigner de l'état pulvérulent favorable à l'exhalaison des arômes et qualités gustatives, ledit état étant jugé a priori le plus désirable.

Pourtant, pour des raisons de facilité de transport, de manipulation et d'utilisation, il est de plus en plus courant de disposer de produits compacts. Ainsi, dans le domaine alimentaire, on cherche à transformer des composés originalement sous une forme pulvérulente en produits compacts afin de faciliter leur transport, leur manipulation et leur utilisation. En particulier, disposer de produits compacts permet de simplifier le dosage de ces composés par exemple pour réaliser des décoctions, des infusions ou des lixiviations dans l'eau. La forme compacte permet également d'éviter la dissémination non souhaitée de particules fines et d'améliorer la résistance à l'oxydation des composés concernés.

Il serait utile de pouvoir disposer de produits compacts à base de composés végétaux naturels préalablement broyés et se trouvant à l'état de poudres.

Toutefois, la compaction de tels composés sous forme de poudres à des cadences suffisantes pour autoriser une exploitation industrielle est rendue particulièrement difficile du fait de la composition chimique des végétaux naturels de ces poudres. En effet, les composés végétaux présents dans ces poudres comprennent souvent des polymères, comme par exemple de la cellulose, de l'hémicellulose, de la lignine, qui présentent une forte composante de déformation élastique. Cette composante de déformation élastique entraîne une instabilité des produits obtenus par compaction de ces poudres végétales selon les procédés classiques de compaction de l'art antérieur : ainsi les produits obtenus peuvent être instables, fragiles et sujets à l'attrition lorsqu'on a utilisé une faible force de compaction. Au contraire, les produits obtenus présentent des phénomènes de clivage, et donc une fragilité insatisfaisante, lorsqu'on utilise une force de compaction élevée.

Il peut être proposé d'ajouter à ces poudres de composés végétaux des excipients pour limiter les effets de leur composante de déformation élastique. Toutefois, en particulier dans le domaine de l'alimentaire, ces excipients doivent pouvoir être ingérés. Ils ne doivent pas non plus altérer le goût ou l'effet du produit alimentaire dans lequel ils sont rajoutés.

Ainsi, il existe le besoin d'un procédé permettant de compacter de façon industrielle des poudres de composés végétaux naturels afin d'obtenir des produits compacts ingérables présentant d'une part une stabilité et une résistance les rendant faciles à transporter et à manipuler, et d'autre part une aptitude au délitement dans l'eau chaude les rendant propices à la préparation de solutions dosées, comme par exemple des décoctions.

Le document US 3,121, 635 décrit un procédé pour obtenir des pastilles compactées à partir de poudre de café. Le procédé comprend une humidification de la poudre avec de l'eau, une compaction à pression constante puis une dessiccation. Ce procédé, comprenant un ajout d'eau puis une dessiccation, conduit cependant immanquablement à une perte d'arômes.

La demande de brevet EP 0 229 920 décrit également un procédé pour compacter de la poudre de café. La compaction s'effectue sous une pression constante de 20.7-48.3 MPa et s'accompagne d'une exsudation notable d'huiles. Lors de l'utilisation de ces pastilles de café, il peut cependant être observé une altération du goût et notamment une accentuation de l'amertume. L'altération des propriétés gustatives est également illustrée par l'obtention après lixiviation d'un rendement en extrait sec supérieur à celui obtenu pour la poudre de café et donc supérieur à 100%.

CA 808 588 A décrit un procédé pour la préparation de comprimés à base de café. La compression a lieu à une pression de 8 000-13 000 psig pendant un intervalle de temps suffisamment long pour arriver à un produit avec un rendement relatif en extrait augmenté de 10-20% par rapport à une quantité équivalente de café fraichement torréfié et moulu. Ce traitement provoque aussi un dégazage prononcé du café. Les comprimés fournissent du café qui contient moins d'huile de café. Des durées de compression de 0.2-0.5 s à une pression constante de 10000 psig, ainsi que la préparation de café à partir de ces comprimés sont aussi divulgués.

US-A-3 770 457 décrit un procédé de préparation de comprimés de café, avec une étape de dégazage initiale en maintenant le café à des conditions ambiantes pendant au moins 3 heures, suivi par une étape de compression à une pression de 8 000-16 000 psi après chauffage de la poudre de café. La compression à une pression de 8000 - 16000 psi est maintenue pendant une durée suffisamment logue pour obtenir une tablette présentant un rendement en extrait est augmenté d'au moins 10% par rapport à une quantité équivalente de café fraichement torréfié et moulu. L'étape de dégazage est essentielle pour éviter l'apparition de fissures dans les comprimés. La distribution des tailles des particules de café est, de préférence, ainsi que la taille de 85% des particules de café se situe entre 12 et 30 U.S. Standard mesh et la taille de 15% des particules est inférieure à 30 mesh.

Le problème est donc de developper des produits compacts, à base d'ingrédients végétaux, résistants aux chocs, se délitant dans l'eau et possédant des propriétés gustatives satisfaisantes.

La demanderesse a maintenant constaté de façon surprenante que le compactage des poudres végétales à volume constant plutôt qu'à pression constante permet d'obtenir des produits à la fois suffisamment résistants et conservant leurs propriétés gustatives.

Ainsi, après décoction, le rendement en extrait sec des produits compacts selon l'invention est comparable ou inférieur au rendement obtenu avec les poudres végétales de départ. Les qualités gustatives des poudres végétales sont ainsi conservées ou améliorées.

Il est probable que les procédés selon l'état de la technique comportent l'application d'une pression top élevée ayant pour conséquence une modification des propriétés gustatives des produits obtenus. Cette « surcompression » se traduisant lors de la mise en contact avec l'eau chaude par des rendements relatifs en extraits secs trop élevés. En effet, d'un point de vue gustatif, il ne s'agit pas de préparer des produits « *pressés* » mais des produits compactés dont les arômes seront extraits lors de la mise en contact avec l'eau par par percolation, infusion ou lixiviation notamment. Un but de la présente invention est de faire des produits compactés à base d'ingrédients végétaux à l'état solide, à base de café, permettant la préparation de boissons chaudes par lixiviation, tout en étant quand même éventuellement utilisables en percolation ou infusion.

Un autre but de l'invention est de fournir des produits pour faire des boissons chaudes, ces produits ayant un volume réduit par rapport aux poudres.

Un autre but de l'invention est de proposer des produits compactés, ou pastilles, ou comprimés, permettant une bonne exhalaison des arômes et qualités gustatives.

Un autre but de l'invention est de faire des produits pour boissons chaudes par lixiviation, à base de café, ayant une amertume réduite.

Un autre but de l'invention est de proposer des produits compactés permettant de préparer commodément de quantités de boissons chaudes correspondant à une ou plusieurs tasses de boissons, la concentration de la boisson correspondant facilement aux désirs des buveurs des dites boissons.

Un autre but de l'invention est de proposer des pastilles, également appelées comprimés, permettant une lixiviation avec un bon taux d'extraction des matières non aqueuses.

Un autre but de l'invention est de fournir des pastilles ayant une bonne solidité lors des manipulations normales des dites pastilles.

Un autre but de l'invention est de fournir des pastilles faciles à fabriquer en grandes séries avec une haute productivité.

Un autre but de l'invention est de fournir un procédé permettant la préparation ou la fabrication commode des dites pastilles.

Un autre but de l'invention est de fournir un procédé permettant la préparation ou la fabrication des dites pastilles avec une haute productivité et à une grande cadence.

D'autres buts et objets de l'invention apparaîtront au cours de la description qui va suivre.

Il a maintenant été trouvé que tout ou partie de ces buts pouvaient être atteints grâce aux produits selon l'invention et au procédé de l'invention.

Dans le présent exposé, le signe de séparation, dans les valeurs numériques, entre la partie entière et les décimales est le point et non pas la virgule (10.5 représente dix et demi).

L'invention a aussi pour objet un procédé de préparation, ou de fabrication, de produits compactés, à base de poudre de café, comprenant les étapes suivantes, tels que revendiquées.

Selon l'invention, il est préféré que la réduction du volume initial se fasse pendant une durée de 0.1 à 2 seconde, de préférence de 0.2 à 0.8 seconde ; quant à la contrainte de compaction, une fois le volume final obtenu, on préfère la maintenir pendant une durée entre 0.3 et 2 seconde, et encore plus préférentiellement entre 0.5 et 1.5 seconde.

De manière préférentielle, la contrainte de compaction à volume constant est maintenue au moins jusqu'à la perte d'élasticité de la poudre.

La quantité de poudre mise en oeuvre dans l'invention est avantageusement comprise entre 2 et 30 grammes, de préférence entre 5 et 15 grammes.

On a aussi découvert dans l'invention que l'absence de dégazage préalable de la poudre est favorable à la réalisation des produits de l'invention ; un dégazage préalable produit souvent une fragilité par tendance au clivage et/ou une perte d'arômes et/ou de qualités gustatives.

La compaction selon l'invention s'effectue de préférence avec un système de compactage (ou formage) dans laquelle la pression appliquée est transmise par déplacement sur une longueur déterminée de une ou deux parois (appelées quelquefois poinçon) entourant le matériau à compacter.

Un mode de réalisation avantageux selon l'invention consiste à mettre en oeuvre une presse à came, c'est-à-dire où le déplacement de la ou des paroi(s) de l'espace de confinement est déterminé par une bielle dont le mouvement est déterminé par une came, les résultats de l'invention étant beaucoup plus faciles à obtenir que si l'on tente d'utiliser une presse hydraulique.

Ces presses comportent avantageusement un tube de type extrudeur, avec un poinçon à un bout, ou un poinçon à chaque bout.

La poudre utilisée pour le compactage est l'une ou l'autre des poudres existantes ou commercialisées pour faire de la boisson café. Ces produits sont connus en soi et sont constitués préférentiellement par du café rôti ou torréfié, et moulu, éventuellement mélangé avec des additifs ou de la chicorée. Ces produits de départ, ou poudre, mis en oeuvre dans l'invention, ont une teneur en humidité de l'ordre de 3 à 10% en poids ; soumis à une température de 120°C pendant 20 mn, ils présentent une perte en matières volatiles supérieure à 2% en poids, de préférence comprise entre 2 et 10 %, et de manière encore plus préférentielle comprise entre 3 et 7 %.

Dans le cas du café, on sait que le café vert est obtenu en décortiquant les grains de café, que ces grains sont ensuite torréfiés (fortement chauffés, on parle aussi de brûlage ou de grillage), ce qui développe leur arôme et leur donne leur couleur foncée. Avec la torréfaction, les grains doublent de grosseur environ. Ils sont ensuite moulus afin d'obtenir une poudre de café dont la taille des particules est généralement de l'ordre de 0.1 à 3mm en moyenne, de préférence 0.2 à 2mm ; la poudre a une perte en masse, à 110°c pendant 20 minutes, généralement supérieure ou égale à 2%. La densité du café moulu obtenu est généralement inférieure ou égale 0,6, de préférence inférieure ou égale à 0.4.

La présente invention permet la préparation de produits compacts, en particulier pour utilisation dans le domaine alimentaire, stables, résistants, donc faciles à manipuler et à stocker, et délitables dans l'eau, en particulier dans de l'eau chaude.

Les produits compacts selon l'invention sont susceptibles de générer une boisson par contact avec l'eau notamment par percolation, décoction, infusion ou lixiviation.

Dans la présente demande, la perte de masse est mesurée selon la méthode suivante : l'échantillon est pesé et sa masse initiale est notée. L'échantillon est porté à 110°C pendant 20 minutes. On mesure alors sa masse finale. On calcule alors le pourcentage de masse perdue entre la masse finale et la masse initiale.

Dans la présente demande, on définit la granulométrie d'une composition pulvérulente ou d'une poudre par le diamètre moyen des particules constituant cette composition pulvérulente ou cette poudre.

Par « perte de matières volatiles » on entend la perte de vapeur d'eau ou de tous autres composés volatils.

Dans la présente demande, on définit la densité apparente par la masse volumique de la composition, qui est la masse rapportée à une unité de volume dans l'état de sa présentation (exprimée en g/cm³). A titre d'exemple la densité de l'eau est égale à 1.

Le rendement relatif en extrait lixivié, est le rapport relatif pour le produit compacté par rapport à la poudre obtenue par écrasement manuel simple de ce produit compacté, ce rapport étant le quotient des extraits lixiviés dans des conditions semblables (généralement une lixiviation lente de l'ordre de 5mn avec de l'eau à environ 90°C), puis séchés par évaporation de l'eau.

Dans les procédés selon la présente invention, la poudre est compactée jusqu'à un volume réduit puis la contrainte de compaction est maintenue à volume constant (volume de compaction). Le volume réduit (volume de compaction) est avantageusement inférieur ou égal au volume final de la pastille.

Le temps de maintien de la contrainte de compaction à volume constant est essentiel pour l'obtention de produits compacts satisfaisants. Ce temps de maintien de la contrainte de compaction peut être déterminé expérimentalement.

Avantageusement, la demanderesse a trouvé que la contrainte de compaction doit être maintenue au moins jusqu'à la perte d'élasticité de la poudre de composé végétal. En effet, les ingrédients végétaux ont une propriété élastique qui leur permet de recouvrer leur forme et leur volume initial après disparition d'une contrainte. La principale propriété de l'élasticité est d'être réversible. Lors du maintien d'une contrainte de compaction sur une poudre d'ingrédients végétaux, la demanderesse a observé l'existence d'un point de rupture (ou point de compaction) au delà duquel la poudre perd son elasticité. Ce point de rupture pourra être déterminé par l'homme du métier en mesurant la résistance de la poudre lors du maintien de la contrainte de compaction. Ainsi, la mesure de l'effort de compression au cours du temps permet de déterminer la courbe de compression d'une poudre végétale donnée. Cette courbe de compression étant propre à chaque poudre végétale en fonction de son élasticité, de sa teneur en humidité, etc.

La contrainte de compaction doit être maintenue à volume constant pendant une durée déterminée supérieure à la durée nécessaire pour atteindre le point de compaction. Ce point de compaction est repérable dans la courbe de compression.

L'invention a donc pour objet un procédé de préparation d'un produit compact solide d'une composition pulvérulente sous forme de produit compact de volume déterminé comprenant les étapes suivantes:
- placer la composition pulvérulente dans un espace confiné ayant la forme dudit produit compact de volume déterminée,
- compacter ladite composition pulvérulente à un volume de compaction inférieur ou égal au volume déterminé,
- maintenir ladite composition comprimée audit volume de compaction pendant une durée déterminée pour dépasser un point de compaction, et
- relâche de la contrainte de compaction.

Les exemples et figures, donnés à titre non limitatif, illustrent l'invention, et montrent comment elle peut être mise en oeuvre.

### Figures

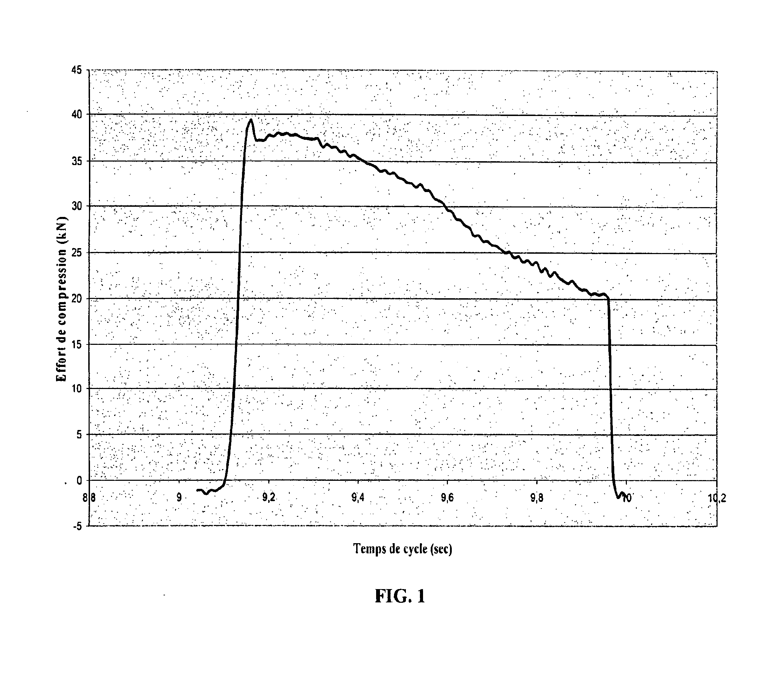

Figure 1 : Courbe de compression du café de l'exemple 1

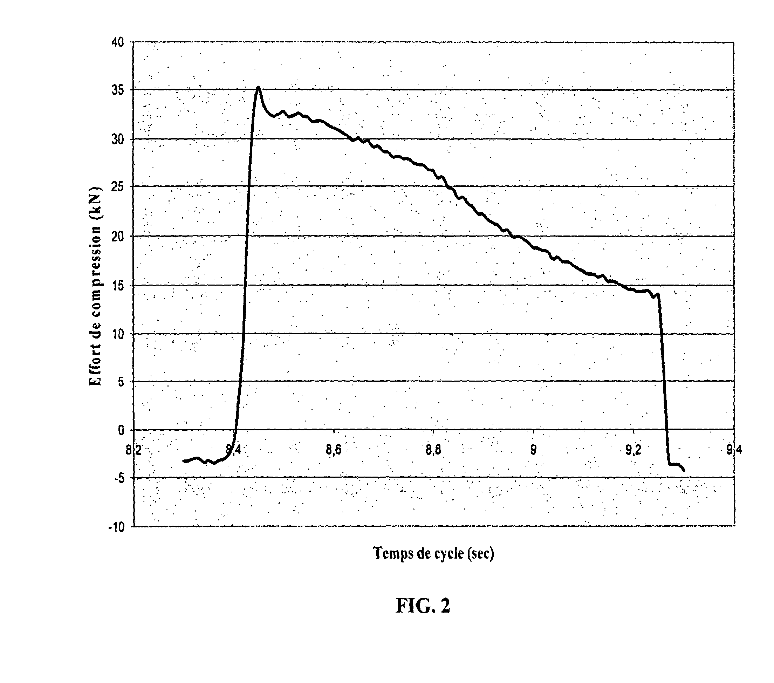

Figure 2 : Courbe de compression du café de l'exemple 2

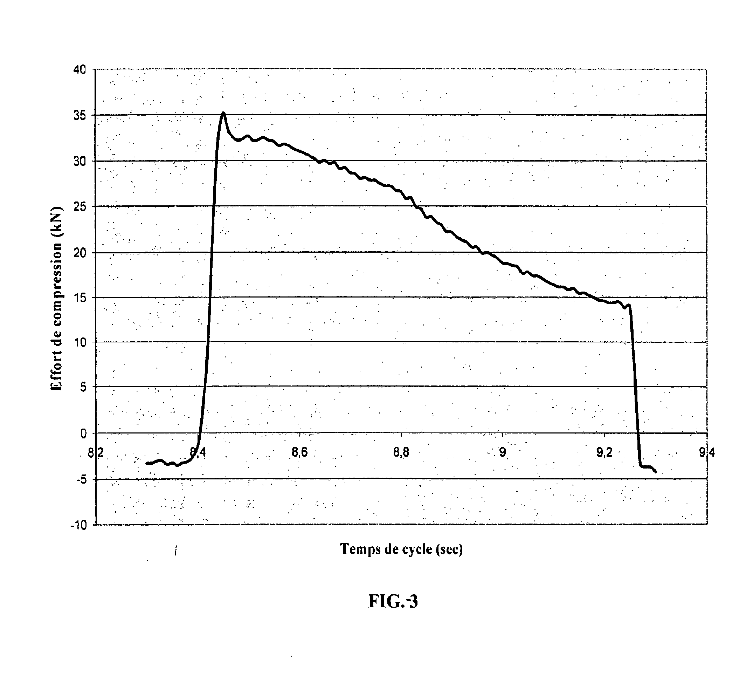

Figure 3 : Courbe de compression du café de l'exemple 3

### Exemple 1

Du café rôti et moulu en grain de taille moyenne 1mm, et ayant une perte en matières volatiles de 4 % après un séjour de 20mn à 120°C , est compacté à l'aide d'un système de compactage permettant d'arriver à un volume constant contrôlé. 7g de poudre sont réduits jusqu'à 30% de leur volume initial en 0.4 seconde, et ce volume est maintenue durant 0.85 seconde. On obtient une pastille plate cylindrique de densité 0.76 g/cm3. Cette pastille a une perte en matières volatiles de 4 % après un séjour de 20mn à 120°C ; sous 40 megapascal à 20°C, elle exsude 0.05% d'huile ; sous 100 megapascal à 20°C elle exsude 0.25% d'huile. On applique une force de 50 Newton selon un diamètre transversal ; la pastille n'est pas endommagée. 5 pastilles semblables tombent de 1.5m et donnent une perte en poids par brisement supérieure à 30% ; 5 autres pastilles tombant de 1m donnent une perte en poids de 3% seulement.

Quatre pastilles semblables sont placées dans un filtre en papier de forme globalement conique, mais ayant une arête linéaire à la place du sommet pointu et ponctuel (arête perpendiculaire à l'axe du cône) ; ces filtres sont connus et commercialisés pour les cafetières fonctionnant par lixiviation.

De l'eau chaude à 80°C est produite par une cafetière électrique, et on en fait passer 500 cm3 sur ces pastilles dans le filtre. On recueille un café d'arôme équivalent à celui obtenu avec du café en poudre, avec une amertume réduite.

Le rapport de quantité d'extrait sec lixivié entre les boissons obtenues à partir respectivement de pastille et de poudre est de 85%.

### Exemples 2 à 9

On reproduit l'exemple 1 avec différentes conditions opératoires. Ces conditions et les résultats obtenus sont indiqués, avec ceux de l'exemple 1, dans le tableau suivant, les autres conditions et résultats étant les mêmes qu'à l'exemple 1.

| | | | | | | | | | |
|---|---|---|---|---|---|---|---|---|---|
| **EXEMPLE** | **1** | **2** | **3** | **4** | **5** | **6** | **7** | **8** | **9** |
| Quantité de poudre mise en oeuvre, en grammes | 7 | 7 | 7 | 7 | 7 | 6 | 8 | 7 | 7 |
| Compaction avec réduction de volume de la poudre (exprimé en pourcent) | 30 | 30 | 30 | 30 | 30 | 30 | 30 | 40 | 20 |
| Durée en secondes de la compaction avant d'atteindre le volume minimal final | 0.4 | 0.4 | 0.4 | 0.4 | 0.4 | 0.4 | 0.4 | 0.4 | 0.4 |
| Durée en seconds du maintien sous pression du volume constant (de la pastille) | 0.85 | 0.65 | 0.85 | 0.85 | 1.1 | 1.1 | 0.65 | 1.1 | 0.65 |
| Densité de la pastille produite en g/cm3 | 0.76 | 0.69 | 0.82 | 0.65 | 0.87 | 0.63 | 0.81 | 0.69 | 0.90 |
| Perte en matières volatiles de la poudre de départ et de la pastille d'arrivée, en 20mn à 120°C (en pourcent) | 4 | 4 | 6 | 3 | 4 | 4 | 4 | 4 | 4 |
| Exsudation à 40 megapascal en pourcent | 0.05 | 0.05 | 0.05 | 0.05 | 0.05 | 0.05 | 0.05 | 0.02 | 0.02 |
| Exsudation à 100 megapascal en pourcent | 0.245 | 0.245 | 0.28 | 0.21 | 0.245 | 0.21 | 0.315 | 0.22 | 0.26 |
| Force, en Newton, appliquée selon un diamètre transversal sans qu'il y ait brisement | 50 | 40 | 55 | 35 | 60 | 33 | 55 | 40 | 60 |
| Perte de poids par brisement de 5 pastilles chutant de 1m | 3 | 4 | 3 | 5 | 1 | 3 | 2 | 4 | 1 |
| Perte de poids, en %, par brisement de 5 pastilles chutant de 1.5m | > 30 | > 40 | > 20 | > 40 | > 20 | > 35 | > 28 | > 50 | > 15 |
| Pourcentage de quantité d'extrait sec lixivié de la boisson obtenue avec une pastille par rapport à la boisson issue de la poudre | 85 | 90 | 80 | 82 | 81 | 80 | 93 | 94 | 80 |

## Revendications

1. Procédé de préparation d'un produit compact à base de poudre de café **caractérisé en ce qu'**il comprend les étapes suivantes :
a. on place de la poudre de café dans un espace connue,
b. on compacte ladite poudre jusqu'à un volume réduit compris entre 20% et 60% du volume initial, de préférence entre 25% et 45%,
c. une fois le volume réduit obtenu, on maintien la poudre comprimée audit volume réduit pendant une durée comprise entre 0.2 seconde et 5 secondes,
d. on relâche la contrainte de compaction.

2. Procédé selon la revendication 1, **caractérisé en ce que** la réduction du volume initial a lieu pendant une durée de 0.1 à 2 seconde, de préférence de 0.2 à 0.8 seconde, et que le volume réduit est maintenu constant pendant une durée comprise entre 0.3 et 2 secondes, et plus préférentiellement entre 0.5 et 1.5 seconde.

3. Procédé selon l'une des revendications 1 ou 2, dans lequel le volume réduit est maintenu constant au moins jusqu'à la perte d'élasticité de la poudre.

4. Procédé selon l'une des revendications 1 à 3, **caractérisé en ce que** la quantité de poudre mise en oeuvre est comprise entre 2 et 30 gammes, de préférence entre 5 et 15 grammes.

5. Procédé selon l'une des revendications 1 à 4, sans phase de dégazage préalable de la poudre.

6. Procédé selon l'une des revendications 1 à 5, **caractérisé en ce que** la compaction s'effectue avec un système de compactage dans laquelle la pression appliquée est transmise par déplacement sur une longueur déterminée de une ou deux parois entourant le matériau à compacter.

7. Procédé selon l'une des revendications 1 à 6, **caractérisé en ce que** la poudre utilisée pour le compactage est du café rôti ou torréfié, et moulu, éventuellement mélangé avec des additifs ou de la chicorée, et ayant de préférence une teneur en humidité de l'ordre de 3% à 10% en poids.

8. Procédé selon l'une des revendications 1 à 7, **caractérisé en ce que** la poudre de café présente, lorsqu'elle est soumise à une température de 120°C pendant 20 mn, une perte en matières volatiles supérieure à 2% en poids, de préférence comprise entre 2% et 10%.

9. Procédé selon l'une des revendications 1 à 8, **caractérisé en ce que** la poudre utilisée pour le compactage est du café rôti ou torréfié, et moulu, la taille des particules de poudre étant de 0.2mm à 3mm en moyenne, de préférence 0.4mm à 2mm.

10. Produis compact susceptible d'être obtenu selon le procédé de l'une quelconque des revendications 1 à 9.

## Claims

1. A method for preparing a compact product from coffee powder, **characterized in that** it comprises the following steps:
a.the coffee powder is placed in a confined space,
b. said powder is compacted down to a reduced volume of between 20% and 60% of the initial volume, preferably between 25% and 45%,
c. once the reduced volume is obtained, the powder compressed to said reduced volume is maintained for a duration of between 0.2 seconds and 5 seconds,
d.the compaction stress is released.

2. The method according to claim 1, **characterized in that** the reduction of the initial volume occurs for a duration of 0.1 to 2 seconds, preferably from 0.2 to 0.8 seconds, and that the reduced volume is kept constant maintained for a duration of 0.3 to 2 seconds, and more preferentially between 0.5 and 1.5 seconds.

3. The method according to any of claims 1 or 2, wherein the reduced volume is kept constant at least until the powder loses elasticity.

4. The method according to any of claims 1 to 3, **characterized in that** the amount of powder used is between 2 and 30 grams, preferably between 5 and 15 grams.

5. The method according to any of claims 1 to 4, without any prior phase for degassing the powder.

6. The method according to any of claims 1 to 5, **characterized in that** the compaction is carried out with a compacting system, wherein the applied pressure is transmitted by displacement over a determined length of one or two walls surrounding the material to be compacted.

7. The method according to any of claims 1 to 6, **characterized in that** the powder used for compacting is ground and roasted or torrefied coffee, optionally mixed with additives or chicory, and preferably having a humidity content of the order of 3% to 10% by weight.

8. The method according to any of claims 1 to 7, **characterized in that**, when subject to a temperature of 120°C for 20 min, the coffee powder has a loss of volatile materials of more than 2% by weight, preferably comprised between 2% and 10 % by weight.

9. The method according to any of claims 1 to 8, **characterized in that** the powder used for compaction is ground and roasted or torrefied coffee, the particle size of the powder being from 0.2 mm to 3 mm on average, preferably from 0.4 mm to 2 mm.

10. A compact product capable of being obtained according to the method of any of claims 1 to 9.

## Patentansprüche

1. Verfahren zur Herstellung eines verdichteten Produkts auf Kaffeepulverbasis, **dadurch gekennzeichnet, dass** es die folgenden Schritte umfasst:
a. Platzieren des Kaffeepulvers in einem begrenzten Raum,
b. Verdichten des Pulvers bis zu einem reduzierten Volumen von 20 % bis 60 %, bevorzugt 25 % bis 45 %, des Ausgangsvolumens,
c. nach Erhalt des reduzierten Volumens, Halten des verdichteten Pulvers bei diesem reduzierten Volumen über einen Zeitraum von 0,2 bis 5 Sekunden,
d. Aufheben der Verdichtungsbelastung.

2. Verfahren gemäß Anspruch 1, **dadurch gekennzeichnet, dass** die Reduzierung des Ausgangsvolumens über einen Zeitraum von 0,1 bis 2 Sekunden, bevorzugt 0,2 bis 0,8 Sekunden, stattfindet, und dass das reduzierte Volumen über einen Zeitraum von 0,3 bis 2 Sekunden, bevorzugter 0,5 bis 1,5 Sekunden, konstant gehalten wird.

3. Verfahren gemäß einem der Ansprüche 1 oder 2, wobei das reduzierte Volumen wenigstens bis zum Verlust der Elastizität des Pulvers konstant gehalten wird.

4. Verfahren gemäß einem der Ansprüche 1 bis 3, **dadurch gekennzeichnet, dass** die Menge des eingesetzten Pulvers 2 bis 30 Gramm, bevorzugt 5 bis 15 Gramm, beträgt.

5. Verfahren gemäß einem der Ansprüche 1 bis 4 ohne eine vorherige Entgasungsphase des Pulvers.

6. Verfahren gemäß einem der Ansprüche 1 bis 5, **dadurch gekennzeichnet, dass** die Verdichtung mit einem Verdichtungssystem bewirkt wird, in dem der angewendete Druck übertragen wird, indem ein oder zwei Wände, welche das zu verdichtende Material umgeben, auf einer vorbestimmten Länge verlagert werden.

7. Verfahren gemäß einem der Ansprüche 1 bis 6, **dadurch gekennzeichnet, dass** das zur Verdichtung verwendete Pulver aus geröstetem oder gebranntem und gemahlenem Kaffee, gegebenenfalls in Mischung mit Zusatzstoffen oder Zichorie, besteht und bevorzugt einen Feuchtigkeitsgehalt in der Größenordnung von 3 bis 10 Gew.-% aufweist.

8. Verfahren gemäß einem der Ansprüche 1 bis 7, **dadurch gekennzeichnet, dass** das Kaffeepulver, wenn es 20 Minuten lang einer Temperatur von 120 °C ausgesetzt wird, einen Verlust an flüchtigen Bestandteilen von über 2 Gew.-%, bevorzugt zwischen 2 und 10 Gew.-%, aufweist.

9. Verfahren gemäß einem der Ansprüche 1 bis 8, **dadurch gekennzeichnet, dass** das zur Verdichtung eingesetzte Pulver aus geröstetem oder gebranntem und gemahlenem Kaffee besteht, wobei die Größe der Pulverpartikel im Durchschnitt 0,2 mm bis 3 mm, bevorzugt 0,4 mm bis 2 mm, beträgt.

10. Verdichtetes Produkt, welches durch ein Verfahren gemäß irgendeinem der Ansprüche 1 bis 9 erhältlich ist.
